Europäisches Patentamt

European Patent Office

Office européen des brevets

(19)

(11) Veröffentlichungsnummer: **0 111 302 B1**

# (12) EUROPÄISCHE PATENTSCHRIFT

(45) Veröffentlichungstag der Patentschrift:
23.04.86

(21) Anmeldenummer: 83112304.7

(22) Anmeldetag: **07.12.83**

(51) Int. Cl.⁴: **B 01 D 53/00**

(54) Verfahren zur Biofiltration.

(30) Priorität: 10.12.82 DE 3245713

(43) Veröffentlichungstag der Anmeldung:
20.06.84 Patentblatt 84/25

(45) Bekanntmachung des Hinweises auf die Patenterteilung:
23.04.86 Patentblatt 86/17

(84) Benannte Vertragsstaaten:
AT BE CH DE FR GB IT LI LU NL SE

(56) Entgegenhaltungen:
DE - A - 2 652 673
DE - A - 3 118 455

(73) Patentinhaber: MANNESMANN VEBA
UMWELTTECHNIK GMBH, Südstrasse 41,
D-4690 Herne 2 (DE)

(72) Erfinder: Lützke, Klaus, Dr.-Ing., Rotdornweg 3,
D-4100 Duisburg 14 (DE)
Erfinder: Vollmer, Henning, Dr.-Ing.,
Frauenlobstrasse 110, D-4630 Bochum 1 (DE)

(74) Vertreter: Meissner, Peter E., Dipl.-Ing. et al,
Patentanwälte Dipl.-Ing. Peter E. Meissner Dipl.-Ing.
Hans-Joachim Presting Herbertstrasse 22,
D-1000 Berlin 33 (DE)

## Beschreibung

Zur Biofiltration wird die zu reinigende Abluft bzw. das zu reinigende Abgas — beide im folgenden als Abgas bezeichnet — an der Entstehungsstelle abgesaugt und durch ein geeignetes Rohrleitungs- und Verteilungssystem einer als Biofilter wirkenden Biomasse, z.B. einer Schüttschicht aus Müllkompost, Fasertorf oder ähnlichen Gemischen, zugeführt. Beim Durchströmen der Schüttschicht tritt das Abgas über den Feuchtigkeitsfilm des Trägermaterials in intensiven Kontakt mit der Biomasse. Die wasserlöslichen, Gerüche und andere Störungen bzw. Belästigungen hervorrufenden Bestandteile des Abgases werden den in der Biomasse vorhandenen Mikroben zur Umwandlung zugeführt. Dabei werden diese Stoffe sowohl absorbiert wie auch mikrobiell umgewandelt bzw. abgebaut.

Entscheidend für die Wirksamkeit des Biofilters ist eine ausreichend hohe Feuchtigkeit in der Biomasse bzw. ihrer mit dem Abgas zusammentreffenden Oberfläche. Der Feuchtigkeitsgehalt einer Biomasse aus Müllkompost kann beispielsweise zwischen 20 und 70 Massen-% liegen, günstig ist in diesem Falle ein Bereich von etwa 40 bis 60 Massen-%. In der Regel liegt die Sättigung an Wasserdampf des Abgases im Bereich zwischen 30 und 70%. Dadurch nimmt das Abgas aus der Biomasse Feuchtigkeit auf, wodurch diese austrocknet. Somit verschlechtern sich die an die wässerige Phase gebundenen Übergangsbedingungen erheblich.

Nach Beschickung eines Biofilters mit neuer Biomasse benötigt die Bakterienpopulation eine gewisse Zeit, meist etwa 2 bis 4 Wochen, um sich auf die angebotenen Abgasverhältnisse einzustellen, bevor eine volle Wirksamkeit des Biofilters erreicht ist. Treten während dieser Zeit bereits die erwähnten Trocknungserscheinungen auf, werden die abzuscheidenden Abgasbestandteile nicht ausreichend absorbiert, die Bakterienpopulation kann sich nicht optimal aufbauen. Die volle Wirkung des Biofilters wird nicht erreicht. In der Praxis hat sich gezeigt, dass eine einmal durch Austrocknen der Biomasse oder falsche Temperatur zerstörte Mikrobiologie in den Filtern nur äusserst langsam regeneriert werden kann oder überhaupt nicht wiederherzustellen ist. In solchen Fällen muss ein vollständiger Austausch der Biomasse erfolgen, um eine wirksame Geruchsbeseitigung der Abgase zu erreichen. Nach der Neubefüllung des Filters muss dann mit der obenerwähnten Anfahrzeit gerechnet werden.

Man versucht, die Biomasse durch Oberflächenbefeuchtung, z.B. mittels Sprenger, auf der notwendigen Feuchte zu halten (DE-A Nr. 2652673). Dabei tritt jedoch eine Überfeuchtung der Oberfläche ein, die wegen der Verringerung der spezifischen Oberfläche zu einer Verringerung der Wirksamkeit gegenüber den optimalen Verhältnissen führt. Das von der Anströmseite der Schüttschicht her stattfindende Austrocknen der Biomasse kann durch diese Massnahme nicht wirksam verhindert werden.

Weiterhin wird durch mechanisches Umsetzen, z.B. durch Umschaufeln und Auflockern, bei gleichzeitiger Anfeuchtung versucht, annähernd optimale Betriebsverhältnisse zu erhalten. Dabei können jedoch Verdichtungen der Biomasse auftreten, die zur Verringerung der aktiven Oberfläche und teilweiser Erhöhung des Druckverlustes führen. Der Aufwand für Personal bzw. der Investitionsaufwand für mechanische Systeme ist bei dieser Arbeitsweise erheblich.

Die vorliegende Erfindung hat es sich zum Ziel gesetzt, die nach Neubeschickung eines Biofilters mit Biomasse angestrebten Feuchtigkeits- und Durchlässigkeitswerte, also die optimalen Absorptionsbedingungen und die optimalen Lebensbedingungen für Bakterien und damit die Effektivität des Biofilters, möglichst schnell zu erreichen und möglichst lange zu erhalten. Erfindungsgemäss wird hierfür der Wasserdampfgehalt des zu reinigenden Abgases so eingestellt, dass der Wasserdampf-Partialdruck 90 bis 100, vorzugsweise 95 bis 100% des Sättigungsdruckes von Wasserdampf bei der betreffenden Temperatur beträgt, die relative Gasfeuchte also mehr als 90, vorzugsweise mehr als 95% ist. Das zu behandelnde Abgas ist also mit Wasser bzw. Wasserdampf annähernd gesättigt.

Die Zuführung von Wasserdampf zu einem Abgas, dessen relative Feuchte geringer als 90 bzw. 95% ist, kann durch hierfür geeignete Vorrichtungen erfolgen, z.B. durch Vernebelungsgeräte, Sprüher oder Dampfdüsen. Bei zu hohem Feuchtigkeitsgehalt des zu reinigenden Abgases muss der Wassergehalt vermindert werden, was durch Kondensationsräume mit Kondensatablass oder mittels hygroskopischer Mittel erfolgen kann.

Ausser der Feuchte ist die Temperatur von erheblichem Einfluss auf die Wirksamkeit biologisch arbeitender Filter. Die Erfahrung zeigt, dass Temperaturen unter 0° C und über +75° C in der Regel für die Aktivität und damit für die Wirksamkeit der Mikroorganismen in der Biomasse schädlich sind. Ein Über- oder Unterschreiten des Temperaturbereichs von 0 bis +75° C führt meist zur Inaktivierung der Mikroorganismen und damit zur Wirkungslosigkeit des Biofilters. Gemäss einer Weiterbildung der Erfindung wird die Temperatur des zu reinigenden Abgases so eingestellt, dass im Biofilter dieser Temperaturbereich eingehalten wird.

Ein Wechsel der Betriebstemperatur im Biofilter führt in der Regel zu einer Änderung der Zusammensetzung der im Filter wirksamen Mikroorganismen. Dadurch wird die Wirksamkeit des Filters für die Dauer der Anpassung an die neuen Gegebenheiten beeinflusst. Gemäss vorliegender Erfahrung wird bei der Biofiltration das zu reinigende Abgas auf den für den jeweiligen Anwendungsbereich optimalen Temperaturbereich eingestellt. Dieser liegt für psychrophile Mikroorganismen zwischen 0 und 20° C, für mesophile Mikroorganismen zwischen 20 und 45° C und für thermophile Mikroorganismen zwischen 45 und 75° C.

Zu heisses Abgas wird durch geeignete Einrichtungen wie Wärmetauscher, Kältepumpen, ggf.

unter Weiterverwendung der entstehenden Wärme auf die optimale Temperatur gekühlt. Diese Temperatur kann auch durch Hinzufügen kalter Luft und anschliessendes Vermischen erreicht werden. Umgekehrt wird zu kaltes Abgas durch Hinzufügen warmer Luft oder durch Aufheizen, z.B. mittels Wärmetauscher oder Begleitheizung, auf die optimale Temperatur eingestellt. Die erfindungsgemässen Massnahmen zur Temperatur- und Feuchtigkeitseinstellung führen zum schnelleren Erreichen der höchstmöglichen Wirksamkeit von Biofiltern bei vorgegebenem Material und vorgegebener Abgaszusammensetzung. Dabei wird die Wirksamkeit des Filters gegenüber ungeregelten Anlagen deutlich verlängert.

## Patentansprüche

1. Verfahren zur Biofiltration, wobei die Biomasse feucht gehalten wird, dadurch gekennzeichnet, dass der Feuchtigkeitsgehalt des zu reinigenden Abgases auf mehr als 90% relative Feuchte eingestellt wird.

2. Verfahren nach Anspruch 1, dadurch gekennzeichnet, dass der Feuchtigkeitsgehalt auf mehr als 95% relative Feuchte eingestellt wird.

3. Verfahren nach einem der Ansprüche 1 oder 2, dadurch gekennzeichnet, dass die Temperatur des zu reinigenden Abgases auf 0 bis 75° C eingestellt wird.

4. Verfahren nach Anspruch 3 unter Verwendung psychrophiler Mikroorganismen, dadurch gekennzeichnet, dass die Temperatur des zu reinigenden Abgases auf 0 bis 20° C eingestellt wird.

5. Verfahren nach Anspruch 3 unter Verwendung mesophiler Mikroorganismen, dadurch gekennzeichnet, dass die Temperatur des zu reinigenden Abgases auf 20 bis 45° C eingestellt wird.

6. Verfahren nach Anspruch 3 unter Verwendung thermophiler Mikroorganismen, dadurch gekennzeichnet, dass die Temperatur des zu reinigenden Abgases auf 45 bis 75° C eingestellt wird.

## Claims

1. A method of biofiltration in which the biomass is kept moist, characterised in that the moisture content of the waste gas to be purified is set at more than 90% relative humidity.

2. A method as claimed in Claim 1, characterised in that the moisture content is set at more than 95% relative humidity.

3. A method as claimed in Claim 1 or 2, characterised in that the temperature of the waste gas to be purified is set at 0 to 75° C.

4. A method as claimed in Claim 3 using psychrophilic micro-organisms, characterised in that the temperature of the waste gas to be purified is set at 0 to 20° C.

5. A method as claimed in Claim 3 using mesophilic micro-organisms, characterised in that the temperature of the waste gas to be purified is set at 20 to 45° C.

6. A method as claimed in Claim 3 using thermophilic micro-organisms, characterised in that the temperature of the waste gas to be purified is set at 45 to 75° C.

## Revendications

1. Procédé de biofiltration, dans lequel la biomasse est maintenue humide, caractérisé en ce que la teneur en humidité du gaz d'échappement à purifier est réglée à une humidité relative supérieure à 90%.

2. Procédé selon la revendication 1, caractérisé en ce que la teneur en humidité est réglée à une humidité relative supérieure à 95%.

3. Procédé selon l'une des revendications 1 ou 2, caractérisé en ce que la température du gaz d'échappement à purifier est réglée entre 0 et 75° C.

4. Procédé selon la revendication 3 utilisant des micro-organismes psychrophiles, caractérisé en ce que la température du gaz d'échappement à purifier est réglée entre 0 et 20° C.

5. Procédé selon la revendication 3 utilisant des micro-organismes mésophiles, caractérisé en ce que la température du gaz d'échappement à purifier est réglée entre 20 et 45° C.

6. Procédé selon la revendication 3 utilisant des micro-organismes thermophiles, caractérisé en ce que la température du gaz d'échappement à purifier est réglée entre 45 et 75° C.